# EUROPEAN PATENT APPLICATION

(11) **EP 4 021 126 A1**
(43) Date of publication of application: **29.06.2022**
(21) Application number: 20857601.7
(22) Date of filing: 13.08.2020
(51) Int. Cl.: H04W 72/12

(54) **DATA RECEIVING METHOD AND DEVICE, AND CONTROL METHOD AND DEVICE**

(30) Priority: 23.08.2019 CN 201910784976
(71) Applicant: Beijing Unisoc Communications Technology Co., Ltd, Beijing 100191 (CN)
(72) Inventor: WANG, Hualei, Beijing 100191 (CN)
(74) Representative: Finnegan Europe LLP
(86) International application number: PCT/CN2020/108907
(87) International publication number: WO 2021/036802

(57) **Abstract**

This disclosure relates to a data receiving method and device and a control method and device, the method comprising: receiving downlink control information (DCI), the DCI comprising a bandwidth update indicator field and a transmission bandwidth indicator field, the transmission bandwidth indicator field carrying transmission bandwidth information, the transmission bandwidth information being used for indicating a frequency domain location; using the transmission bandwidth information to update a transmission bandwidth when the bandwidth update indicator field indicates the transmission bandwidth to be updated; receiving data based on the transmission bandwidth information. In this disclosure, the transmission bandwidth may be updated dynamically based on the DCI's indication, allowing the transmission bandwidth to be updated to match dynamic network traffic demands as network traffic changes dynamically, thereby improving system efficiency and communication experience.

## Description

### TECHNICAL FIELD

This disclosure relates to the field of communication technology and in particular to a data receiving method and device and a control method and device.

### BACKGROUND

In a system that uses a single-carrier waveform in its downlink (DL), such as a satellite system or a high frequency system, a transmission bandwidth for data is at the cell level; in other words, all users in a cell have the same transmission bandwidth. As the traffic in a cell changes dynamically, the transmission bandwidth should also change dynamically so that network overhead or terminal overhead may be reduced.

With respect to downlink semi-persistent scheduling (DL SPS) transmission, once a DL SPS periodic resource is activated by activation downlink control information (DCI), a user equipment will receive data in the activated periodic resource. Therefore, a terminal configured as DL SPS cannot dynamically obtain a system's transmission bandwidth information and thus cannot adapt to dynamic changes in the traffic of its cell, thereby affecting the decoding performance of the terminal and the communication experience of users.

### SUMMARY

In view of the background, this disclosure provides a data receiving method, which is applied in a user equipment, the method comprising:
receiving downlink control information (DCI), the DCI comprising a bandwidth update indicator field and a transmission bandwidth indicator field, the transmission bandwidth indicator field carrying transmission bandwidth information, the transmission bandwidth information being used for indicating a frequency domain location;
using the transmission bandwidth information to update a transmission bandwidth when the bandwidth update indicator field indicates the transmission bandwidth to be updated;
receiving data based on the transmission bandwidth information.

In one possible embodiment, the DCI is a universal DCI for a plurality of user equipments or a dedicated DCI for a specific user equipment.

In one possible embodiment, the receiving data based on the transmission bandwidth information comprises:
using updated transmission bandwidth information to receive data in a time unit in which the DCI is received.

In one possible embodiment, the receiving data based on the transmission bandwidth information comprises:
using updated transmission bandwidth information to receive data in a plurality of specified first time units.

In one possible embodiment, the receiving data based on the transmission bandwidth information comprises:
using updated transmission bandwidth information to receive data in a specified second time unit and/or a plurality of time units after the second time unit, until new DCI indicating the transmission bandwidth to be updated is received.

In one possible embodiment, the time unit may comprise at least one of the following: a slot, set of slots, subframe, frame, symbol, and set of symbols.

In one possible embodiment, the receiving DCI comprises:
using a preset wireless network temporary identifier symbol RNTI to descramble the DCI received.

In one possible embodiment, the receiving data based on the transmission bandwidth information comprises:
determining, based on the frequency domain location indicated by the transmission bandwidth information, a discrete Fourier transform (DFT) length, a frequency domain resource mapped from a DFT output, or an inverse discrete Fourier transform (IDFT) input and length;
using the DFT length to perform an IDFT on the data received, or, using the IDFT input and length to perform an IDFT.

In one possible embodiment, the using the transmission bandwidth information to update a transmission bandwidth when the bandwidth update indicator field indicates the transmission bandwidth to be updated comprises:
determining, when the bandwidth update indicator field carries preset indicator information, that the bandwidth update indicator field indicates the transmission bandwidth to be updated.

In one possible embodiment, the bandwidth update indicator field comprises a resource assignment field and/or time domain resource assignment field, the resource assignment field being used for indicating frequency domain resource assignment or sample-level time domain resource assignment, the time domain resource assignment field being used for indicating OFDM symbol-level time domain resource assignment; here
when bits in the resource assignment field are all 1s or all 0s, and/or when bits in the time domain resource assignment field are all 1s or all 0s, the bandwidth update indicator field is used to indicate the transmission bandwidth to be updated.

In one possible embodiment, the size of the DCI is the same as the size of DCI format 1_0.

Another aspect of this disclosure provides a control method, which is applied in a network element equipment, the method comprising:
sending downlink control information (DCI), the DCI comprising a bandwidth update indicator field and a transmission bandwidth indicator field, the bandwidth update indicator field being used for indicating whether to update a transmission bandwidth, the transmission bandwidth indicator field carrying transmission bandwidth information, the transmission bandwidth information being used for indicating a frequency domain location.

In one possible embodiment, the DCI is a universal DCI for a plurality of user equipments or a dedicated DCI for a specific user equipment.

In one possible embodiment, the bandwidth update indicator field comprises a resource assignment field and/or time domain resource assignment field, the resource assignment field being used for indicating frequency domain resource assignment or sample-level time domain resource assignment, the time domain resource assignment field being used for indicating OFDM symbol-level time domain resource assignment; here
when bits in the resource assignment field are all 1s or all 0s, and/or when bits in the time domain resource assignment field are all 1s or all 0s, the bandwidth update indicator field is used to indicate the transmission bandwidth to be updated.

In one possible embodiment, the size of the DCI is the same as the size of DCI format 1_0.

In one possible embodiment, the method further comprises:
using a preset RNTI to scramble the DCI.

Another aspect of this disclosure provides a data receiving device, which is applied in a user equipment, the device comprising:
a first receiving module for receiving downlink control information (DCI), the DCI comprising a bandwidth update indicator field and a transmission bandwidth indicator field, the transmission bandwidth indicator field carrying transmission bandwidth information, the transmission bandwidth information being used for indicating a frequency domain location;
an updating module, which is connected to the first receiving module, for using the transmission bandwidth information to update a transmission bandwidth when the bandwidth update indicator field indicates the transmission bandwidth to be updated;
a second receiving module, which is connected to the updating module, for receiving data based on the transmission bandwidth information.

Another aspect of this disclosure provides a control device, which is applied in a network element equipment, the device comprising:
a sending module for sending downlink control information (DCI), the DCI comprising a bandwidth update indicator field and a transmission bandwidth indicator field, the bandwidth update indicator field being used for indicating whether to update a transmission bandwidth, the transmission bandwidth indicator field carrying transmission bandwidth information, the transmission bandwidth information being used for indicating a frequency domain location.

Another aspect of this disclosure provides a data receiving device, comprising:
a processor;
a memory device for storing an executable instruction of the processor;
wherein the processor is configured to implement the data receiving method.

Another aspect of this disclosure provides a control device, comprising:
a processor;
a memory device for storing an executable instruction of the processor;
wherein the processor is configured to implement the control method.

Another aspect of the disclosure provides a non-volatile computer readable storage medium on which a computer program instruction is stored, the computer program instruction implementing, when executed by a processor, the data receiving method.

Another aspect of the disclosure provides a non-volatile computer readable storage medium on which a computer program instruction is stored, the computer program instruction implementing, when executed by a processor, the control method.

Through the method and device above, the user equipment may receive the DCI, use the transmission bandwidth information to update the transmission bandwidth when the bandwidth update indicator field in the DCI indicates the transmission bandwidth to be updated, and receive data based on the transmission bandwidth information. In this disclosure, the transmission bandwidth may be updated dynamically based on the DCI's indication, allowing the transmission bandwidth to be updated to match dynamic network traffic demands as network traffic changes dynamically, thereby improving system efficiency and communication experience.

Other features and aspects of the disclosure will be made clear by the following detailed description of exemplary embodiments in reference to the drawings.

### BRIEF DESCRIPTION OF THE DRAWINGS

Drawings contained in the Description and constituting a part of the Description, together with the Description, show exemplary embodiments, features, and aspects of the disclosure and are used for explaining principles in the disclosure.
FIG. 1 is a diagram illustrating a communication system according to one embodiment in this disclosure.
FIG. 2 is a flowchart illustrating a data receiving method according to one embodiment in this disclosure.
FIG. 3 is a diagram illustrating receiving of data according to one embodiment of the disclosure.
FIG. 4 is a flowchart illustrating a control method according to one embodiment in this disclosure.
FIG. 5 is a block diagram illustrating a data receiving device according to one embodiment in this disclosure.
FIG. 6 is a block diagram illustrating a control device according to one embodiment in this disclosure.
FIG. 7 is a block diagram illustrating a data receiving device according to one embodiment in this disclosure.
FIG. 8 is a block diagram illustrating a data receiving device according to one embodiment in this disclosure.

### DETAILED DESCRIPTION

Exemplary embodiments, features, and aspects of the disclosure will be described below in detail in reference to the drawings. Identical markings in the drawings represent elements that have the same or similar functions. Although the drawings illustrate various aspects of the embodiments, the drawings are not necessarily created in proportion unless specifically indicated so.

The specific term "exemplary" in this document means "being used as an example or embodiment, or illustrative." In this document, any embodiment that is described as "exemplary" is not necessarily interpreted as being superior or better than other embodiments.

Additionally, many specific details are provided in the detailed description below to better describe the disclosure. Persons of ordinary skill in the art should understand that the disclosure may be implemented even without certain specific details. In some embodiments, no detailed description is provided on methods, means, elements, and circuits that are well known to persons of ordinary skill in the art so as to stay focused on the theme of the disclosure.

Embodiments according to this disclosure may be adapted for 5G (5 generation) communication systems, 4G communication systems, 3G communication systems, satellite communication systems, or various communication systems evolved in the future, such as 6G and 7G communication systems.

Embodiments in this disclosure are also adapted for various network architectures, including but not limited to relay network architecture, dual link architecture, and vehicle-to-everything architecture.

"5G CN", as mentioned in the embodiments in this disclosure, may also be referred to as new core network, 5G New Core, next generation core (NGC) network, etc. The 5G-CN is set independently from existing core networks, such as evolved packet core (EPC) networks.

In the embodiments in this disclosure, a network element equipment may be a base station (BS), also referred to as base station equipment, is a device deployed in a radio access network (RAN) to provide wireless communication functions. Examples of equipment that provides base station functions include base transceiver stations (BTS) and base station controllers (BSC) in 2G networks, Nodes B and radio network controller (RNC) in 3G networks, evolved Nodes B (eNB) in 4G networks, access points (AP) in wireless local area networks (WLAN), gNBs in 5G New Radio (NR), and equipments that provide base station functions in new communication systems in the future.

In the embodiments in this disclosure, a user equipment (UE) may refer to an access terminal, user unit, user station, mobile station (MS), remote station, remote terminal, mobile equipment, user terminal equipment, terminal equipment, wireless communication equipment, user agent, or user device of various forms. The user equipment may also be a cellular phone, cordless phone, Session Initiation Protocol (SIP) phone, Wireless Local Loop (WLL) station, Personal Digital Assistant (PDA), handheld equipment or computing equipment with wireless communication functions or another processing equipment connected to a wireless modem, in-vehicle equipment, wearable equipment, user equipment in a future 5G network, terminal equipment in a Public Land Mobile Network (PLMN) evolved in the future, etc. The embodiments in the disclosure do not impose any limitation in this regard.

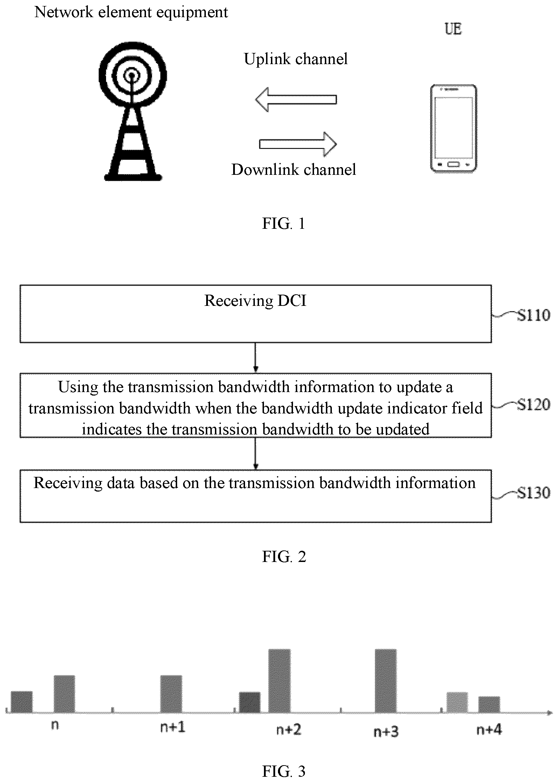

FIG. 1 is a diagram illustrating a communication system according to one embodiment in this disclosure. Various embodiments in this disclosure may be applied in the communication system illustrated in FIG. 1. In the embodiments in the disclosure, a downlink (DL) is defined as a one-way communication link from an access network to a user equipment (UE), downlink data is data transmitted on a downlink, and the direction of transmission of downlink data is referred to as the downlink direction; an uplink (UL) is as a one-way communication link from a UE to an access network, uplink data is data transmitted on an uplink, and the direction of transmission of uplink data is referred to as the uplink direction.

It should be understood that the term "and/or" in this document simply describes the relationship between related subjects; this term indicates three possible relationships. For example, "A and/or B" may indicate: A alone, A and B, or B alone. Additionally, the symbol "/" in this document indicates an "or" relationship between the related subjects that precedes and follows it, respectively.

"Connection/connect" in the embodiments in the disclosure refers to a direct or indirect connection by various means to implement communication between equipments; the embodiments in the disclosure do not impose any limitation in this regard.

In the embodiments in the disclosure, "network" and "system" are meant to express the same concept, i.e. a communication system is a communication network. "Connection/connect" in the embodiments in the disclosure refers to a direct or indirect connection by various means to implement communication between equipments; for example, connecting different equipments through a communication interface. There is no limitation in this regard.

FIG. 2 is a flowchart illustrating a data receiving method according to one embodiment in this disclosure.

The method is applied in a user equipment and comprises:
step S110, receiving downlink control information (DCI), the DCI comprising a bandwidth update indicator field and a transmission bandwidth indicator field, the transmission bandwidth indicator field carrying transmission bandwidth information, the transmission bandwidth information being used for indicating a frequency domain location;
step S120, using the transmission bandwidth information to update a transmission bandwidth when the bandwidth update indicator field indicates the transmission bandwidth to be updated;
step S130, receiving data based on the transmission bandwidth information.

Through the method above, the user equipment may receive the DCI, use the transmission bandwidth information to update the transmission bandwidth when the bandwidth update indicator field in the DCI indicates the transmission bandwidth to be updated, and receive data based on the transmission bandwidth information. In this disclosure, the transmission bandwidth may be updated dynamically based on the DCI's indication, allowing the transmission bandwidth to be updated to match dynamic network traffic demands as network traffic changes dynamically, thereby improving system efficiency and communication experience.

It should be noted that in this disclosure, to update a transmission bandwidth may be to update a transmission bandwidth that is used when the user equipment receives or decodes data, or it may also be understood as to update transmission bandwidth information for receiving or decoding data. In various embodiments in this disclosure, to use updated transmission bandwidth to update may also be understood as to use transmission bandwidth information in DCI to update transmission bandwidth information that is used when the user equipment receives data. In various embodiments in this disclosure, to use updated transmission bandwidth to receive data may also be understood as to use updated transmission bandwidth information to receive data.

It should be noted that the step S130, receiving data based on the transmission bandwidth information, may comprise receiving data and/or decoding based on the transmission bandwidth information. After using the transmission bandwidth information to update the transmission bandwidth, the user equipment may determine a time when the updated transmission bandwidth information takes effect for using the transmission bandwidth information to receive data or perform decoding on a data channel.

In one possible embodiment, the frequency domain location may comprise a starting point of the frequency domain (e.g. it may be a starting frequency), a frequency domain resource length (bandwidth size), and other information.

In one possible embodiment, the data receiving method according to this disclosure may be applied in a plurality of scenarios to update the transmission bandwidth that is used when the user equipment receives data.

In one example, the data receiving method according to this disclosure may be applied in a downlink semi-persistent scheduling (DL SPS) scenario. This scenario will be used in the following text to describe this disclosure. However, it should be understood that this disclosure is not limited to this scenario. In other embodiments, the data receiving method according to this disclosure may alternatively be applied in scenarios other than the DL SPS scenario.

When the data receiving method is applied in the DL SPS scenario, this disclosure may, through the aforementioned method, dynamically update a DL SPS transmission bandwidth based on the DCI's indication, allowing the DL SPS transmission bandwidth to be updated to match dynamic network traffic demands as network traffic changes dynamically, thereby improving system efficiency and communication experience.

In one possible embodiment, the DCI may be a universal DCI for a plurality of user equipments or a dedicated DCI for a specific user equipment.

The universal DCI may be a common DCI, and the common DCI may have a universal DCI format for a plurality of user equipments. When a plurality of user equipments in a network are configured as DL SPS, using the universal DCI to update transmission bandwidths of the plurality of user equipments in the network may improve operating efficiency and reduce network overhead.

The dedicated DCI may be a UE-specific DCI. For different user equipments, dedicated DCIs may be used to update DL SPS transmission bandwidths, thereby meeting the needs of different user equipments and increasing adaptability and flexibility.

Of course, persons of ordinary skill in the art may choose whether to use a universal DCI or a dedicated DCI to update a DL SPS transmission bandwidth according to their needs; this disclosure does not impose any limitation in this regard.

In one possible embodiment, the size of the DCI is the same as the size of DCI format 1_0.

In this disclosure, the DCI used when the transmission bandwidth is updated may be the same or similar in size as a commonly used DCI format, so the method described in the disclosure may achieve better consistency and adaptability with a current communication system, thereby reducing the complexity of blind searches performed by user equipments.

This disclosure uses the DCI format 1_0 as an example in the description. However, it should be understood that this disclosure is not limited to this format. In other embodiments, persons of ordinary skill in the art may set the size of the DCI disclosed herein to be the same as or similar to the size of another DCI format.

In one possible embodiment, the DCI in this disclosure may comprise:
a DCI format identifier field, indicated by 1 bit;
a resource assignment field, all bits set to 1;
a time domain resource assignment field, all bits set to 1;
a transmission bandwidth indicator field, which is indicated by 4 bits and may be used for bearing the transmission bandwidth information;
a modulation and coding scheme field, indicated by 5 bits;
a new data indicator field, indicated by 1 bit;
a redundancy version field, indicated by 2 bits;
a HARQ process number field, indicated by 6 bits;
a TPC command field, indicated by 2 bits;
a PUCCH resource indicator field, indicated by 4 bits.

Of course, the description above is exemplary and should not be seen as limitation on this disclosure. In other embodiments, the DCI fields may increase, or decrease, and the size of each field may change.

In one possible embodiment, the step SI20, using the transmission bandwidth information to update a transmission bandwidth when the bandwidth update indicator field indicates the transmission bandwidth to be updated, may comprise:
determining, when the bandwidth update indicator field carries preset indicator information, that the bandwidth update indicator field indicates the transmission bandwidth to be updated.

In one example, the preset indicator information may be information in which bits in the bandwidth update indicator field are all 1s or all 0s.

According to this disclosure, it is determined, when the bandwidth update indicator field carries the preset indicator information, that the bandwidth update indicator field indicates the transmission bandwidths to be updated, so the transmission bandwidth is updated, thus enabling simpler operations and reducing implementation complexity.

In one possible embodiment, the bandwidth update indicator field may be a new field or an existing field in the DCI. For example:
in one possible embodiment, the bandwidth update indicator field comprises a resource assignment field and/or time domain resource assignment field, the resource assignment field being used for indicating frequency domain resource assignment or sample-level time domain resource assignment, the time domain resource assignment field being used for indicating OFDM symbol-level time domain resource assignment; here
when bits in the resource assignment field are all 1s or all 0s, and/or when bits in the time domain resource assignment field are all 1s or all 0s, the bandwidth update indicator field is used to indicate the transmission bandwidth to be updated.

The bandwidth update indicator field may be implemented using a resource assignment field already existing in the DCI, using a time domain resource assignment field, or using a combination thereof.

Of course, in other embodiments, the bandwidth update indicator field may alternatively be implemented using other fields in the DCI; this disclosure does not impose any limitation in this regard.

When the user equipment receives the resource assignment field with its bits being all 1s or all 0s and/or the time domain resource assignment field with its bits being all 1s or all 0s, it may be considered that the network element equipment is indicating the DCI to indicate the transmission bandwidth to be updated.

Of course, in other embodiments, the resource assignment field and/or time domain assignment field, or other fields used for implementing the bandwidth update indicator may be set to other values. For example, all bits may be 0, or the bits may be another combination of 0s and 1s, i.e., the preset indicator information may be set otherwise. This disclosure does not impose any limitation in this regard.

In one possible embodiment, the DCI may be used only for updating the transmission bandwidth.

In this scenario, when the user equipment receives the resource assignment field with its bits being all 1s or all 0s and/or the time domain resource assignment field with its bits being all 1s or all 0s, it may be considered that the network element equipment is indicating the DCI to indicate the transmission bandwidth to be updated, and the DCI is used only for updating the transmission bandwidth.

In one possible embodiment, the step S110, receiving DCI, may comprise:
using a preset wireless network temporary identifier symbol RNTI to descramble the DCI received.

This disclosure may be used for updating transmission bandwidths of a plurality of user equipments, and the frequency domain location may bear data of one or a plurality of user equipments.

In one possible embodiment, the network element equipment, when sending the DCI, may scramble the DCI using a preset RNTI.

This disclosure does not impose any limitation on the preset RNTI; persons of ordinary skill in the art may choose an RNTI (e.g. U-RNTI) according to their needs.

In one possible embodiment, the step S130, receiving data based on the transmission bandwidth information, may comprise:
determining, based on the frequency domain location indicated by the transmission bandwidth information, a discrete Fourier transform (DFT) length, a frequency domain resource mapped from a DFT output, or an inverse discrete Fourier transform (IDFT) input and length;
using the DFT length to perform an IDFT on the data received, or, using the IDFT input and length to perform an IDFT.

In one example, when a DL SPS interval arrives, the user equipment may receive data in a DL SPS resource (e.g. SPS slot) and process the data (e.g. decode the data). In this scenario, this disclosure may, based on the transmission bandwidth information, determine a DFT length, a frequency domain resource mapped from a DFT output, or an IDFT input and length, and use the DFT length to perform an IDFT on the data received or use the IDFT input and length to perform an IDFT.

In one example, it is assumed that the length of a frequency domain resource in the transmission bandwidth information comprises K consecutive subcarriers, then the DFT length may be determined to be K.

With respect to how to determine a DFT length, a frequency domain resource mapped from a DFT output, or an IDFT input and length, and how to use the DFT length to perform an IDFT on data received or use the IDFT input and length to perform an IDFT, persons of ordinary skill in the art may reference relevant techniques, and the details will not be repeated in this disclosure.

In one possible embodiment, after the step S120, using the transmission bandwidth information to update a transmission bandwidth when the bandwidth update indicator field indicates the transmission bandwidth to be updated, the user equipment may receive data in a specified time unit. In other words, an effective time for the updated transmission bandwidth to take effect may be specified as needed. For illustrative purposes, examples are provided below.

In one possible embodiment, the step S130, receiving data based on the transmission bandwidth information, may comprise:
using updated transmission bandwidth information to receive data in a time unit in which the DCI is received.

It may be specified that the updated transmission bandwidth information is used to receive data in a current time unit in which the DCI is received, i.e. it may be specified that the updated transmission bandwidth information takes effect only in the current time unit in which the DCI is received.

In one possible embodiment, the step S130, receiving data based on the transmission bandwidth information, may comprise:
using updated transmission bandwidth information to receive data in a plurality of specified first time units.

For example, the updated transmission bandwidth information may apply in the first time units of n+T1, n+T1+1, ..., n+T2; here, n may represent the time unit in which the DCI is received, T1 is a natural number with a unit of time unit, T2 is a natural number with a unit of time unit, and T2>=T1.

Of course, the first time units may also be specified otherwise, and this disclosure does not impose any limitation on specific time units that are specified.

In one possible embodiment, the step S130, receiving data based on the transmission bandwidth information, may comprise:
using updated transmission bandwidth information to receive data in a specified second time unit and/or a plurality of time units after the second time unit, until new DCI indicating the transmission bandwidth to be updated is received.

For example, the updated transmission bandwidth information may be applied in all time units (slots) after n+T3 (the second time unit), until new DCI indicating new data transmission bandwidth information is received; here, n may represent the time unit in which the DCI is received, T3 is a natural number with a unit of time unit.

Of course, this disclosure does not impose any limitation on any specific second time unit that is specified.

In one possible embodiment, the time unit may comprise at least one of the following: a slot, set of slots, subframe, frame, symbol, and set of symbols.

In one possible embodiment, the effective time unit in which the updated transmission bandwidth information takes effect may be determined based on a protocol.

Of course, in other embodiments, other effective time units may be indicated by protocols. This disclosure does not impose any limitation in this regard.

Through the aforementioned method, the user equipment may determine the time unit in which the updated transmission bandwidth information takes effect, thereby adapting to different network traffic situations.

With regard to using updated transmission bandwidth to receive data, a description is provided below in reference to a specific example.

FIG. 3 is a diagram illustrating receiving of data according to one embodiment of the disclosure.

The user equipment has a DL SPS resource configured by the network element equipment, and receives an activation DCI in slot n; so the user equipment, in slot n, assumes the transmission bandwidth for data to be a transmission bandwidth indicated by the activation DCI, and, at this time, the user equipment uses the transmission bandwidth indicated by the activation DCI to receive data;
in slot n+1, the user equipment does not receive any DCI that updates the transmission bandwidth, so the user equipment assumes that the transmission bandwidth for data is still the transmission bandwidth indicated by the activation DCI;
in slot n+2, the user equipment receives DCI that updates the transmission bandwidth, so the user device thinks that the transmission bandwidth for data in slot n+2 is a transmission bandwidth indicated by the DCI that updates the transmission bandwidth;
in slot n+3, the user equipment does not receive any DCI that updates the transmission bandwidth, so the user equipment assumes that the transmission bandwidth for data is still the transmission bandwidth indicated by the DCI received in slot n+2 that updates the transmission bandwidth;
in slot n+4, the user equipment receives another piece of DCI that updates the transmission bandwidth, so the user device thinks that the transmission bandwidth for data in slot n+4 is a transmission bandwidth indicated by the DCI that updates the transmission bandwidth.

It should be noted that the description above is exemplary and should not be seen as limitation on the disclosure.

Through the method above, various embodiments according to this disclosure may implement dynamic updating of the DL SPS transmission bandwidth of the user equipment to match dynamic network traffic demands.

In the example above, the dynamic updating of the DL SPS transmission bandwidth of the user equipment is used as an example for description purposes; however, the disclosure is not limited to this scenario, and the method described in this disclosure may also be used in other scenarios.

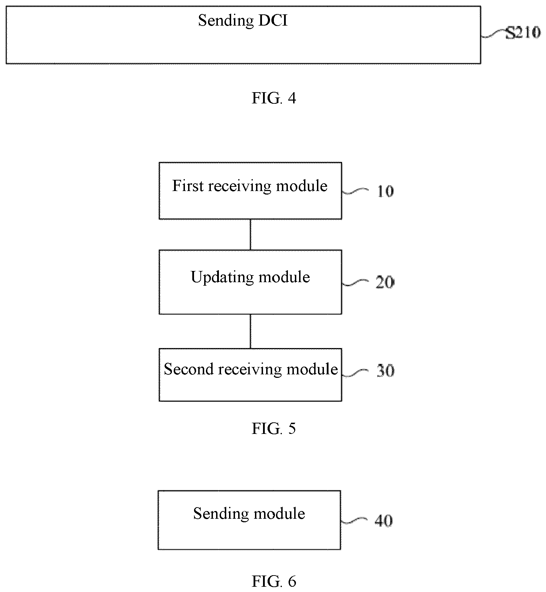

FIG. 4 is a flowchart illustrating a control method according to one embodiment in this disclosure.

The method may be applied in a network element equipment; as shown in FIG. 4, the method may comprise:
step S210, sending downlink control information (DCI), the DCI comprising a bandwidth update indicator field and a transmission bandwidth indicator field, the bandwidth update indicator field being used for indicating whether to update a transmission bandwidth, the transmission bandwidth indicator field carrying transmission bandwidth information, the transmission bandwidth information being used for indicating a frequency domain location.

Through the method above, this disclosure may send DCI that carries indication on whether to update the transmission bandwidth to provide indication to a user equipment, thus controlling the user equipment to update the transmission bandwidth when the bandwidth update indicator field is used to indicate the transmission bandwidth to be updated.

In one possible embodiment, the DCI is a universal DCI for a plurality of user equipments or a dedicated DCI for a specific user equipment.

In one possible embodiment, the bandwidth update indicator field comprises a resource assignment field and/or time domain resource assignment field, the resource assignment field being used for indicating frequency domain resource assignment or sample-level time domain resource assignment, the time domain resource assignment field being used for indicating OFDM symbol-level time domain resource assignment; here
when bits in the resource assignment field are all 1s or all 0s, and/or when bits in the time domain resource assignment field are all 1s or all 0s, the bandwidth update indicator field is used to indicate the transmission bandwidth to be updated.

In one possible embodiment, the size of the DCI is the same as the size of DCI format 1_0.

In one possible embodiment, the method further comprises:
using a preset RNTI to scramble the DCI.

It should be noted that the control method is a method applied in a network element equipment, and it corresponds to the data receiving method; please refer to the previous description on the data receiving method for details about the control method, and such details will not be repeated here.

FIG. 5 is a block diagram illustrating a data receiving device according to one embodiment in this disclosure.

The device may be applied in a user equipment; as shown in FIG. 5, the device may comprise:
a first receiving module 10 for receiving downlink control information (DCI), the DCI comprising a bandwidth update indicator field and a transmission bandwidth indicator field, the transmission bandwidth indicator field carrying transmission bandwidth information, the transmission bandwidth information indicator being used for indicating a frequency domain location;
an updating module 20, which is connected to the first receiving module 10, for using the transmission bandwidth information to update a transmission bandwidth when the bandwidth update indicator field indicates the transmission bandwidth to be updated;
a second receiving module 30, which is connected to the updating module 20, for receiving data based on the transmission bandwidth information.

Through the device above, the user equipment may receive the DCI, use the transmission bandwidth information to update the transmission bandwidth when the bandwidth update indicator field in the DCI indicates the transmission bandwidth to be updated, and receive data based on the transmission bandwidth information. In this disclosure, the transmission bandwidth may be updated dynamically based on the DCI's indication, allowing the transmission bandwidth to be updated to match dynamic network traffic demands as network traffic changes dynamically, thereby improving system efficiency and communication experience.

In one possible embodiment, the DCI is a universal DCI for a plurality of user equipments or a dedicated DCI for a specific user equipment.

In one possible embodiment, the receiving data based on the transmission bandwidth information comprises:
using updated transmission bandwidth information to receive data in a time unit in which the DCI is received.

In one possible embodiment, the receiving data based on the transmission bandwidth information comprises:
using updated transmission bandwidth information to receive data in a plurality of specified first time units.

In one possible embodiment, the receiving data based on the transmission bandwidth information comprises:
using updated transmission bandwidth information to receive data in a specified second time unit and/or a plurality of time units after the second time unit, until new DCI indicating the transmission bandwidth to be updated is received.

In one possible embodiment, the time unit may comprise at least one of the following: a slot, set of slots, subframe, frame, symbol, and set of symbols.

In another embodiment, the receiving DCI comprises:
using a preset wireless network temporary identifier symbol RNTI to descramble the DCI received.

In one possible embodiment, the receiving data based on the transmission bandwidth information comprises:
determining, based on the frequency domain location indicated by the transmission bandwidth information, a discrete Fourier transform (DFT) length, a frequency domain resource mapped from a DFT output, or an inverse discrete Fourier transform (IDFT) input and length;
using the DFT length to perform an IDFT on the data received, or, using the IDFT input and length to perform an IDFT.

In one possible embodiment, the using the transmission bandwidth information to update a transmission bandwidth when the bandwidth update indicator field indicates the transmission bandwidth to be updated comprises:
determining, when the bandwidth update indicator field carries preset indicator information, that the bandwidth update indicator field indicates the transmission bandwidth to be updated.

In one possible embodiment, the bandwidth update indicator field comprises a resource assignment field and/or time domain resource assignment field, the resource assignment field being used for indicating frequency domain resource assignment or sample-level time domain resource assignment, the time domain resource assignment field being used for indicating OFDM symbol-level time domain resource assignment; here
when bits in the resource assignment field are all 1s or all 0s, and/or when bits in the time domain resource assignment field are all 1s or all 0s, the bandwidth update indicator field is used to indicate the transmission bandwidth to be updated.

In one possible embodiment, the size of the DCI is the same as the size of DCI format 1_0.

It should be noted that the data receiving device is a device corresponding to the data receiving method; please refer to the previous description on the data receiving method for details about the control method, and such details will not be repeated here.

FIG. 6 is a block diagram illustrating a control device according to one embodiment in this disclosure.

The device may be applied in a network element equipment; as shown in FIG. 6, the device may comprise:
a sending module 40 for sending downlink control information (DCI), the DCI comprising a bandwidth update indicator field and a transmission bandwidth indicator field, the bandwidth update indicator field being used for indicating whether to update a transmission bandwidth, the transmission bandwidth indicator field carrying transmission bandwidth information, the transmission bandwidth information being used for indicating a frequency domain location.

Through the device above, this disclosure may send DCI that carries indication on whether to update the transmission bandwidth to provide indication to a user equipment, thus controlling the user equipment to update the transmission bandwidth when the bandwidth update indicator field is used to indicate the transmission bandwidth to be updated.

In one possible embodiment, the DCI is a universal DCI for a plurality of user equipments or a dedicated DCI for a specific user equipment.

In one possible embodiment, the bandwidth update indicator field comprises a resource assignment field and/or time domain resource assignment field, the resource assignment field being used for indicating frequency domain resource assignment or sample-level time domain resource assignment, the time domain resource assignment field being used for indicating OFDM symbol-level time domain resource assignment; here
when bits in the resource assignment field are all 1s or all 0s, and/or when bits in the time domain resource assignment field are all 1s or all 0s, the bandwidth update indicator field is used to indicate the transmission bandwidth to be updated.

In one possible embodiment, the size of the DCI is the same as the size of DCI format 1_0.

In one possible embodiment, the device further comprises:
a scramble module, which is connected to the sending module, using a preset RNTI to scramble the DCI.

It should be noted that the control device is a device corresponding to the control method; please refer to the previous description on the control method for details about the control method, and such details will not be repeated here.

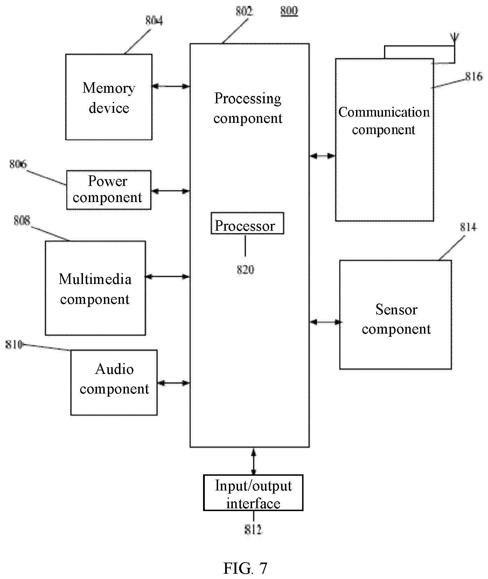

FIG. 7 is a block diagram illustrating a data receiving device according to one embodiment in this disclosure.

For example, the data receiving device 800 may be a mobile phone, computer, digital broadcast data receiving device, messaging equipment, game console, tablet equipment, medical equipment, fitness equipment, or Personal Digital Assistant.

Referring to FIG. 7, the data receiving device 800 may comprise one or a plurality of the following components: a processing component 802, a memory device 804, a power component 806, a multimedia component 808, an audio component 810, an input/output (I/O) interface 812, a sensor component 814, and a communication component 816.

Typically, the processing component 802 controls overall operations of the data receiving device 800, such as operations related to display, phone calls, data communication, camera operations, and recording operations. The processing component 802 may comprise one or a plurality of processors 820 to execute instructions to complete all or some of the steps in the aforementioned methods. Moreover, the processing component 802 may comprise one or a plurality of modules to facilitate interaction between the processing component 802 and other components. For example, the processing component 802 may comprise a multimedia module to facilitate interaction between the multimedia component 808 and the processing component 802.

The memory device 804 is configured to store data of various types to support operations on the data receiving device 800. Examples of such data include instructions, contacts data, phonebook data, messages, images, and videos used for any application or method operated on the data receiving device 800. The memory device 804 may be implemented as a volatile or non-volatile memory equipment of any type; such as a static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk; or a combination thereof.

The power component 806 provides power to various components of the data receiving device 800. The power component 806 may comprise a power management system; one or a plurality of power supplies; and other components related to the generation, management, and assignment of power for the data receiving device equipment 800.

The multimedia component 808 comprises a screen that provides an output interface between the data receiving device 800 and a user. In some embodiments, the screen may comprise a liquid crystal display (LCD) and a touch panel (TP). If the screen comprises a touch panel, the screen may be implemented as a touch screen to receive input signals from the user. The touch panel comprises one or a plurality of touch sensors to sense touches, slides, and gestures on the touch panel. The touch sensor may not only sense boundary of a touching or sliding action, but also detect the duration and pressure associated with a touching or sliding operation. In some embodiments, the multimedia component 808 comprises a front camera and/or a rear camera. When the data receiving device 800 is in an operating mode, such as a shooting mode or video mode, the front camera and/or the rear camera may receive external multimedia data. Each front camera and rear camera may be a fixed optical lens system or have the ability to adjust its focus and perform optical zooming.

The audio component 810 is configured to output and/or input audio signals. For example, the audio component 810 comprises a microphone (MIC); when the data receiving device 800 is in an operating mode, such as a call mode, record mode, and voice recognition mode, the microphone is configured to receive external audio signals. The audio signals received may further be stored in the memory device 804 or sent through the communication component 816. In some embodiments, the audio component 810 further comprises a speaker for outputting audio signals.

The I/O interface 812 provides an interface between the processing component 802 and a peripheral interface module, and the peripheral interface module may be a keyboard, click wheel, or button. Such a button may include but is not limited to: a home button, volume button, start up button, and lock button.

The sensor component 814 comprises one or a plurality of sensors for providing state assessment on various aspects for the data receiving device 800. For example, the sensor component 814 may detect the on/off state of the data receiving device 800 and relative positioning of components, such as a display and a keypad of the data receiving device 800. The sensor component 814 may also detect changes in the location of the data receiving device 800 or in the location of a component of the data receiving device 800, the existence or nonexistence of contact between the user and the data receiving device 800, the orientation or acceleration/deceleration of the data receiving device 800, and changes in the temperature of the data receiving device 800. The sensor component 814 may comprise a proximity sensor configured to detect the existence of nearby objects without any physical contact. The sensor component 814 may further comprise an optical sensor, such as a CMOS or CCD image sensor, for use in an imaging application. In some embodiments, the sensor component 814 may further comprise an accelerometer, gyro sensor, magnetic sensor, pressure sensor, or temperature sensor.

The communication component 816 is configured to facilitate wired or wireless communication between the data receiving device 800 and other equipment. The data receiving device 800 may access a communication standard-based wireless network, such as Wi-Fi, 2G, or 3G, or a combination thereof. In one exemplary embodiment, the communication component 816 receives broadcast signals or broadcast related information from an external broadcast management system through a broadcast channel. In one exemplary embodiment, the communication component 816 further comprises a near field communication (NFC) module to facilitate short-range communication. For example, the NFC module may be implemented based on radio frequency identification (RFID) technology, Infrared Data Association (IrDA) technology, ultra-wideband (UWB) technology, Bluetooth (BT) technology, or another technology.

In an exemplary embodiment, the data receiving device 800 may be implemented by one or a plurality of application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for executing the aforementioned methods.

An exemplary embodiment further provides a non-volatile computer readable storage medium, e.g. the memory device 804 that includes computer program instructions; the computer program instructions may be executed by the processor 820 of the data receiving device 800 to complete the aforementioned methods.

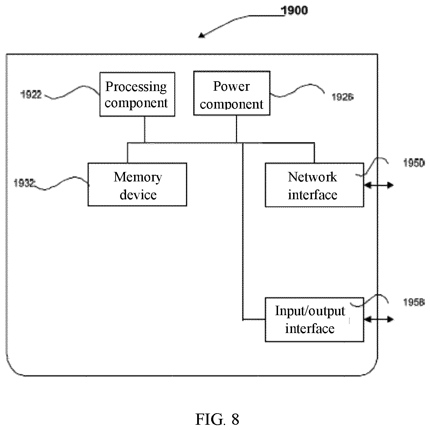

FIG. 8 is a block diagram illustrating a data receiving device according to one embodiment in this disclosure.

For example, the data receiving device 900 may be provided as a server. Referring to FIG. 8, the data receiving device 900 comprises a processing component 922, which comprises one or a plurality of processors, and a memory device resource represented by a memory device 932 for storing an instruction executable by the processing component 922 (e.g. an application). An application stored in the memory device 932 may comprise one or more modules, each corresponding to a set of instructions. Moreover, the processing component 922 may be configured to execute instructions to implement the aforementioned methods.

The data receiving device 900 may further comprise a power component 926 configured to execute power management for the data receiving device 900, a wired or wireless network interface 950 configured to connect the data receiving device 900 to a network, and an input/output (I/O) interface 958. The data receiving device 900 may operate an operating system stored in the memory device 932, for example, Windows ServerTM, Mac OS XTM, UnixTM, LinuxTM, FreeBSDTM, or the like.

An exemplary embodiment further provides a non-volatile computer readable storage medium, e.g. the memory device 932 that includes computer program instructions; the computer program instructions may be executed by the processing component 922 of the data receiving device 900 to complete the aforementioned methods.

The disclosure may be a system, a method, and/or a computer program product. The computer program product may comprise a computer readable storage medium that carries a computer readable program instruction used for causing the processor to implement various aspects of the disclosure.

The computer readable storage medium may be a tangible equipment capable of keeping and storing instructions used by instruction-executing equipment. The computer readable storage medium may be, for example, but is not limited to an electrical memory equipment, magnetic memory equipment, optical memory equipment, electromagnetic memory equipment, semiconductor memory equipment, or any suitable combination thereof. More specific examples (a non-exhaustive list) of computer readable storage media include: portable computer disks, hard disks, random access memories (RAMs), read-only memories (ROMs), erasable programmable read-only memories (EPROMs or flash memories), static random-access memories (SRAMs), compact disc read-only memories (CD-ROMs), digital versatile disks (DVDs), memory sticks, floppy disks, mechanical coding equipments (such as punch cards or raised structures in grooves on which an instruction are stored), and any suitable combination thereof. The computer readable storage medium used here is not to be interpreted as transient signals themselves, such as radio waves, other electromagnetic waves freely propagated, other electromagnetic waves propagated through waveguides or other propagation media (for example, optical pulses through fiber optic cables), or other electrical signals transmitted through electrical wires.

The computer readable program instruction described here may be downloaded from the computer readable storage medium to various computing/processing equipments; or downloaded from a network, such as the Internet, a local area network (LAN), a wide area network (WAN), and/or a Wi-Fi network, to an external computer or an external memory equipment. The network may comprise a copper transmission cable, fiber optic transmission, wireless transmission, a router, a firewall, a switch, a gateway computer, and/or an edge server. A network adapter card or a network interface in each computing/processing equipment receives a computer readable program instruction from the network, and forwards the computer readable program instruction to be stored in a computer readable storage medium in a computing/processing equipment.

The computer program instruction for executing operations of the disclosure may be an assembly instruction, instruction set architecture (ISA) instruction, machine instruction, machine related instruction, microcode, firmware instruction, state setting data, or source code or object code written in one or any combination of a plurality of programming languages; the programming languages comprises an object-oriented programming language (such as Smalltalk and C++), a common procedural programming language (such as "C"), or a similar programming language. The computer readable program instruction may be executed entirely on a user computer, partially on a user computer, as a standalone software package, partially on a user computer and partially on a remote computer, or entirely on a remote computer or server. When a remote computer is involved, the remote computer may be connected to a user computer through a network of any type, including a LAN network or a WAN network; or, may be connected to an external computer (for example, connected through the Internet by using an Internet service provider). In some embodiments, an electrical circuit is customized by state information of a computer readable program instruction; such an electrical circuit may be a programmable logic circuit, field programmable gate array (FPGA), or programmable logic array (PLA); and the electrical circuit may execute a computer readable program instruction to implement various aspects in the disclosure.

This document describes various aspects in the disclosure in reference to flowcharts and/or block diagrams of the methods, devices (systems), and computer program products in the embodiments in the disclosure. It should be understood that each block in the flowcharts and/or block diagrams and combinations of the blocks in the flowcharts and/or block diagrams may all be implemented by computer readable program instructions.

These computer readable program instructions may be provided to a processor of a general purpose computer, a special purpose computer, or another programmable data processing device to produce a machine so as to create, when these instructions are executed by the processor of the computer or the other programmable data processing device, a device that implements functions/actions specified in one or a plurality of blocks in the flowcharts and/or block diagrams. These computer readable program instructions may also be stored in a computer readable storage medium, and these instructions cause a computer, a programmable data processing device, and/or another equipment to work in a certain way; thus, the computer readable medium that stores the instructions comprises a manufacture, which comprises instructions for implementing various aspects of functions/actions specified in one or a plurality of blocks in the flowcharts and/or block diagrams.

The computer readable program instructions may also be loaded to a computer, another programmable data processing device, or another equipment so that a series of operative steps are executed on the computer, the other programmable data processing device, or the other equipment to create a process of computer implementation, thereby causing functions/actions specified in one or a plurality of blocks in the flowcharts and/or block diagrams to be implemented by the instructions executed on the computer, the other programmable data processing device, or the other equipment.

The flowcharts and block diagrams in the drawings illustrate system architectures, functions, and operations that may be implemented by the systems, methods, and computer program products based on a plurality of embodiments in the disclosure. In this regard, each block in the flowcharts or block diagrams may represent a module, a program segment, or a part of an instruction; the module, program segment, or part of the instruction contains one or a plurality of executable instructions for implementing specified logical functions. In some alternative implementations, functions marked in the blocks may, alternatively, occur in an order different from that marked in the drawings. For example, depending on the functions involved, two consecutive blocks may, in fact, be executed in an essentially parallel way, and sometimes they may, alternatively, be executed in a reverse order. Also to be noted is that each block in the block diagrams and/or flowcharts and combinations of the blocks in the block diagrams and/or flowcharts may be implemented by a special purpose hardware-based system that executes specified functions or actions, or by a combination of special purpose hardware and computer instructions.

With respect to the embodiments in the disclosure described above, the descriptions are exemplary and not exhaustive, and are not limited to the disclosed embodiments. Without deviating from the scope and spirit of the embodiments described, many modifications and changes are evident for persons of ordinary skill in the art. Terminology choices in this document are meant to best explain the principles and practical applications of the embodiments or improvements of technologies in the market, or to enable other persons of ordinary skill in the art to understand the embodiments disclosed in this document.

## Claims

1. A data receiving method, wherein the method is applied in a user equipment, the method comprising:
receiving downlink control information (DCI), the DCI comprising a bandwidth update indicator field and a transmission bandwidth indicator field, the transmission bandwidth indicator field carrying transmission bandwidth information, the transmission bandwidth information being used for indicating a frequency domain location;
using the transmission bandwidth information to update a transmission bandwidth when the bandwidth update indicator field indicates the transmission bandwidth to be updated;
receiving data based on the transmission bandwidth information.

2. The method of claim 1, wherein the DCI is a universal DCI for a plurality of user equipments or a dedicated DCI for a specific user equipment.

3. The method of claim 1, wherein the receiving data based on the transmission bandwidth information comprises:
using updated transmission bandwidth information to receive data in a time unit in which the DCI is received.

4. The method of claim 1, wherein the receiving data based on the transmission bandwidth information comprises:
using updated transmission bandwidth information to receive data in a plurality of specified first time units.

5. The method of claim 1, wherein the receiving data based on the transmission bandwidth information comprises:
using updated transmission bandwidth information to receive data in a specified second time unit and/or a plurality of time units after the second time unit, until new DCI indicating the transmission bandwidth to be updated is received.

6. The method of any of claims 3 through 5, wherein the time unit may comprise at least one of the following: a slot, set of slots, subframe, frame, symbol, and set of symbols.

7. The method of claim 1, wherein the receiving DCI comprises:
using a preset wireless network temporary identifier symbol RNTI to descramble the DCI received.

8. The method of claim 1, wherein the receiving data based on the transmission bandwidth information comprises:
determining, based on the frequency domain location indicated by the transmission bandwidth information, a discrete Fourier transform (DFT) length, a frequency domain resource mapped from a DFT output, or an inverse discrete Fourier transform (IDFT) input and length;
using the DFT length to perform an IDFT on the data received, or, using the IDFT input and length to perform an IDFT.

9. The method of claim 1, wherein the using the transmission bandwidth information to update a transmission bandwidth when the bandwidth update indicator field indicates the transmission bandwidth to be updated comprises:
determining, when the bandwidth update indicator field carries preset indicator information, that the bandwidth update indicator field indicates the transmission bandwidth to be updated.

10. The method of claim 1, wherein the bandwidth update indicator field comprises a resource assignment field and/or time domain resource assignment field, the resource assignment field being used for indicating frequency domain resource assignment or sample-level time domain resource assignment, the time domain resource assignment field being used for indicating OFDM symbol-level time domain resource assignment; here
when bits in the resource assignment field are all 1s or all 0s, and/or when bits in the time domain resource assignment field are all 1s or all 0s, the bandwidth update indicator field is used to indicate the transmission bandwidth to be updated.

11. The method of claims 1 or 9, wherein the size of the DCI is the same as the size of DCI format 1_0.

12. A control method, wherein the method is applied in a network element equipment, the method comprising:
sending downlink control information (DCI), the DCI comprising a bandwidth update indicator field and a transmission bandwidth indicator field, the bandwidth update indicator field being used for indicating whether to update a transmission bandwidth, the transmission bandwidth indicator field carrying transmission bandwidth information, the transmission bandwidth information being used for indicating a frequency domain location.

13. The method of claim 12, wherein the DCI is a universal DCI for a plurality of user equipments or a dedicated DCI for a specific user equipment.

14. The method of claim 12, wherein the bandwidth update indicator field comprises a resource assignment field and/or time domain resource assignment field, the resource assignment field being used for indicating frequency domain resource assignment or sample-level time domain resource assignment, the time domain resource assignment field being used for indicating OFDM symbol-level time domain resource assignment; here
when bits in the resource assignment field are all 1s or all 0s, and/or when bits in the time domain resource assignment field are all 1s or all 0s, the bandwidth update indicator field is used to indicate the transmission bandwidth to be updated.

15. The method of claims 12 or 14, wherein the size of the DCI is the same as the size of DCI format 1_0.

16. The method of claim 12, further comprising:
using a preset RNTI to scramble the DCI.

17. A data receiving device, wherein the device is applied in a user equipment, the device comprising:
a first receiving module for receiving downlink control information (DCI), the DCI comprising a bandwidth update indicator field and a transmission bandwidth indicator field, the transmission bandwidth indicator field carrying transmission bandwidth information, the transmission bandwidth information being used for indicating a frequency domain location;
an updating module, which is connected to the first receiving module, for using the transmission bandwidth information to update a transmission bandwidth when the bandwidth update indicator field indicates the transmission bandwidth to be updated;
a second receiving module, which is connected to the updating module, for receiving data based on the transmission bandwidth information.

18. A control device, wherein the device is applied in a network element equipment, the device comprising:
a sending module for sending downlink control information (DCI), the DCI comprising a bandwidth update indicator field and a transmission bandwidth indicator field, the bandwidth update indicator field being used for indicating whether to update a transmission bandwidth, the transmission bandwidth indicator field carrying transmission bandwidth information, the transmission bandwidth information being used for indicating a frequency domain location.

19. A data receiving device, comprising:
a processor;
a memory device for storing an executable instruction of the processor;
wherein the processor is configured to implement the method of any of claims 1 through 11.

20. A control device, comprising:
a processor;
a memory device for storing an executable instruction of the processor;
wherein the processor is configured to implement the method of any of claims 12 through 16.

21. A non-volatile computer readable storage medium, on which a computer program instruction is stored, wherein the computer program instruction, when executed by a processor, implements the method of any of claims 1 through 11.

22. A non-volatile computer readable storage medium, on which a computer program instruction is stored, wherein the computer program instruction, when executed by a processor, implements the method of any of claims 12 through 16.
